Europäisches Patentamt

European Patent Office

Office européen des brevets

(11) Publication number: **0 148 776 B2**

(12) **NEW EUROPEAN PATENT SPECIFICATION**

(45) Date of publication of the new patent specification: **23.10.91 Bulletin 91/43**

(51) Int. Cl.⁵: **G21F 5/00, B23K 9/02, B23K 35/00**

(21) Application number: **85300125.3**

(22) Date of filing: **08.01.85**

(54) Cast iron containers.

(30) Priority: **09.01.84 US 569070**

(43) Date of publication of application: **17.07.85 Bulletin 85/29**

(45) Publication of the grant of the patent: **07.09.88 Bulletin 88/36**

(45) Mention of the opposition decision: **23.10.91 Bulletin 91/43**

(84) Designated Contracting States: **DE FR GB IT SE**

(56) References cited:
**EP-A- 0 061 400**
**EP-A- 0 082 467**
**EP-A- 0 092 679**

(56) References cited:
**DE-A- 3 142 646**
**DE-A- 3 150 663**
**US-A- 3 460 237**
**US-A- 3 838 289**

(73) Proprietor: **WESTINGHOUSE ELECTRIC CORPORATION**
**Westinghouse Building Gateway Center**
**Pittsburgh Pennsylvania 15235 (US)**

(72) Inventor: **Filippi, Arthur Mario**
**928 Lovingston Drive**
**Pittsburg Pennsylvania (US)**
Inventor: **Sprecace, Richard Paul**
**3554 McWilliams Road**
**Murrysville Pennsylvania (US)**

(74) Representative: **van Berlyn, Ronald Gilbert**
**23, Centre Heights**
**London, NW3 6JG (GB)**

EP 0 148 776 B2

## Description

This invention relates to cast iron containers and especially those for nuclear waste which are hermetically sealed by welding. It is more particularly concerned with those heavy walled, waste containers made from gray cast irons or ductile cast irons.

It is desired that nuclear waste containers, to be geologically isolated, be designed to provide years of hermetic containment. Consequently, any design for such containers must address the problem of corrosion by geological fluids, as well as closure welding related failure concerns due to residual stresses in the weld metal and heat affected zones surrounding the fusion zone of the weld.

A previously proposed concept for a waste container consisted of a heavy walled main body component casting of gray or ductile cast iron having a test tube like shape. The wall thickness of such containers in designs providing substantial radiation shielding of high-level waste can exceed 12 inches. After loading the nuclear waste material into the container casting the open end of the casting is hermetically sealed by welding a cast iron cylindrical plug into this opening. The plug has a depth on the order of the wall thickness of the container. The closure weld thus formed is tubular in shape, extending down around the circumference of the plug for a distance on the order of the wall thickness of the main body component.

The phase structure of commercial gray and ductile iron castings typically consists of ferrite and graphite at ambient temperature, but during welding the austenite phase will form in that region of the heat-affected zone nearest the fusion line. It is well known that if austenite is not slowly cooled it can transform into the strong non-equilibrium phase called martensite. Martensite is generally to be avoided in welded material since a volume increase accompanies it resulting in tensile stress in the adjacent material. This martensite related stress is likely to cause cracking in low ductility materials such as cast irons. As a very general rule, martensite formation can be prevented in steel weldments without the necessity of reducing their cooling rate by preheating, if the material's carbon equivalent (C.E.) does not exceed 0.45 (C.E. = % C + % Mn/6 + % Cr/5 + % Mo/4, Metals Handbook, 1971). This carbon equivalent limit is greatly exceeded by gray and ductile irons whose carbon level alone ranges typically between 3 and 4 w/o. Another major element typically found in these cast irons is silicon. Silicon is typically added in concentrations of about 2-3 weight percent to stabilize graphite phase rather than iron carbide (cementite) phase when these alloys are slowly cooled from the austenite phase. One of the characteristics of gray and ductile irons making them particularly suited to fabrication by casting results from formation of graphite during slow cooling which, due to its low density compared to iron, compensates for much of the shrinkage accompanying solidification. However, when these irons are not slowly cooled, the higher density iron carbide phase forms instead of graphite and the resulting solidification shrinkage is correspondingly higher. Consequently, iron carbide commonly forms in cast iron weldments cooled by adjacent metal, requiring the associated shrinkage and resulting tensile stress to be accommodated in the weld bead and surrounding structure. Cast irons have a low capacity for plastically accommodating tensile stress without fracturing.

The development of tensile stress due to severe weld constraint and solid and liquid phase transformation strains in materials having marginal ductility suggests that closure weld failure may occur on cast iron self-shielded packages unless precautions are taken to reduce the severity of the condition. This is normally accomplished in welding practice by using more compliant weld joint designs, elevating the temperature of the parts to reduce the rate of post-weld cooling (reheating), and annealing after welding (post-weld heat treatment). It is questionable whether effective preweld or post-weld heat treatments can be applied to heavy-wall cast iron nuclear waste packages because of practical limitations imposed by their size, weight and temperature sensitive contents.

Accordingly, the present invention resides in a container for nuclear waste as claimed in claim 1.

The nickel-carbon alloy inserts are metallurgically bonded to the cast iron plug and cast iron main body and then welded to each other, thereby forming the hermetic seal around the radioactive contents to be stored. The fusion zone and the heat affected zone of this weld are contained substantially within the confines of the nickel carbon inserts, thereby preventing any adverse metallurgical effects in either the cast iron plug or cast iron main body component.

The composition of the nickel-carbon alloy inserts is preferably selected such that their microstructures are characterized by islands of graphite phase in a matrix of nickel. It is desirable that the volume percentage of graphite phase in the nickel-carbon inserts minimizes any galvanic corrosion between the nickel-carbon inserts and the cast iron members they are bonded to. In order that the invention can be more clearly understood, a convenient embodiment thereof elements interact to produce a simple eutectic system where the solid phases stable below 2404°F (1318°C) for compositions exceeding 0.55 weight percent carbon are nickel (containing small amounts of carbon in solid solution) and graphite. While there have been some reports that a carbide may form in the nickel-carbon system during rapid solidification, it has also been noted that this phase decomposes to the stable nickel and graphite phases at temperatures above 300°C. Thus, unlike cast iron, the heat affected zone adjacent to a weldment in nickel-carbon alloys will not undergo stress-producing solid state phase transformations. Since carbides are not readily formed in the nickel-carbon system but, instead, graphite is produced, weldment shrinkage and associated stresses will be minimized. The thermal coefficients of expansion of nickel and iron are also similar, thus, closure welding will minimize stresses due to any expansion mismatch.

Although stress related to thermal and shrinkage effects would be greatly reduced by using a nickel-carbon welding insert, they cannot be totally eliminated and, therefore some accommodation must occur within the cast iron structure. However, with proper attention given to interrelated closure design and welding considerations it is possible to accommodate much of the stress by plastic deformation of the insert material. The low solubility of carbon in nickel and its presence as a weak graphite constituent in alloys where this solubility limit is exceeded, implies that nickel-carbon alloys should exhibit mechanical properties similar to that of commercially pure nickel if prepared with a discontinuous graphite microstructure. It is therefore believed that our nickel-carbon alloys can provide a large capacity to plastically accommodate weld induced strains without high stresses being developed.

As already noted, nuclear waste packages manufactured for geologic isolation should be designed to provide years of hermetic containment. Consequently, corrosion by geologic fluids as well as welding related considerations have to be addressed in any proposal involving use of dissimilar metals in waste package construction. The principal concern is that a galvanic corrosion condition may result whereby one of the metals will be attacked at an accelerated rate.

In our invention, it is believed that the nickel-carbon alloy forming the insert will be more noble than the cast iron it is bonded to. While it is therefore believed that the cast iron will form the active material if coupled to nickel; i.e., the cast iron structure surrounding the nickel-rich closure welded insert on a nuclear waste package would selectively corrode galvanically in the presence of an electrolyte. This seemingly negative dissimilar metal condition would be partially nullified, however, by the low surface area ratio of the relatively noble nickel-rich insert to active cast iron.

The precise relationship governing the degree to which corrosion of the active leg of a couple will be galvanically accelerated is quite dependent upon specific electrochemical details of the corrosion system; presence or absence of oxygen, polarization, pH, for example. However, in all instances, the increase in corrosion rate of the active leg over that measured in the uncoupled condition would be proportional to the area ratio of the noble-to-active materials.

Any concern over galvanic corrosion in the present invention is further reduced by considering the influence of the graphite phase in the nickel-carbon insert and cast iron materials. Graphite is a more noble material than either nickel or steel. Thus, the metallic portions of the cast iron and nickel-carbon weld insert should corrode preferentially to the particles of graphite contained within these materials.

It is therefore our belief that in the cast iron nuclear waste package sealed by closure welding a nickel-carbon insert, the more active cast iron leg of the galvanic couple would begin to corrode initially. This will involve corrosion of some of the metallic portion of the cast iron at the surface of the package uncovering particles of the contained more noble graphite constituent. As graphite is exposed, it will shift the cast iron potential in the noble direction, reducing the galvanic potential difference between it and the nickel-carbon insert. Should this graphite exposure result in the cast iron becoming more noble than the nickel-carbon insert causing corrosion of the nickel-carbon insert to become galvanically accelerated, such corrosion will also uncover particles of graphite. It follows that after some cast iron and nickelcarbon corrosion has occurred, the electrochemical potential of these materials will be controlled by graphite released in the process, and galvanic corrosion will cease to be an accelerating mechanism.

Typical cast irons contain from 3 to 4 weight percent (or from 11 to 15 volume percent) graphite, thus, similar composition nickel-carbon alloys are considered for the closure welding insert application.

In summary, in the present invention, nickel-carbon alloys are used as bonded welding inserts to circumvent certain fundamental problems associated with direct welding of cast iron nuclear waste packages. A summary of the advantageous attributes of the container design and insert material are given below:

1. By using a welding insert, the cast iron is removed from the vicinity of closure welding thereby preventing its failure by thermally induced phase transformation related stress effects. This eliminates the need to apply very high temperature pre-weld and post-weld heat treatments commonly given high carbon iron-base materials to prevent weldment failure.

2. The absence of allotropy and carbide formation in the recommended nickel-carbon welding insert material, comparable thermal expansion coefficient to that of iron, and low strength and high ductility will combine to minimize the level of welding stress which must be accommodated will now be described, by way of example, with reference to the accompanying drawings in which:

Figure 1 is a longitudinal cross section of the main body of a cast iron container and its plug; and

Figure 2 is an enlarged partial cross-section in the region of the nickel-carbon inserts during welding.

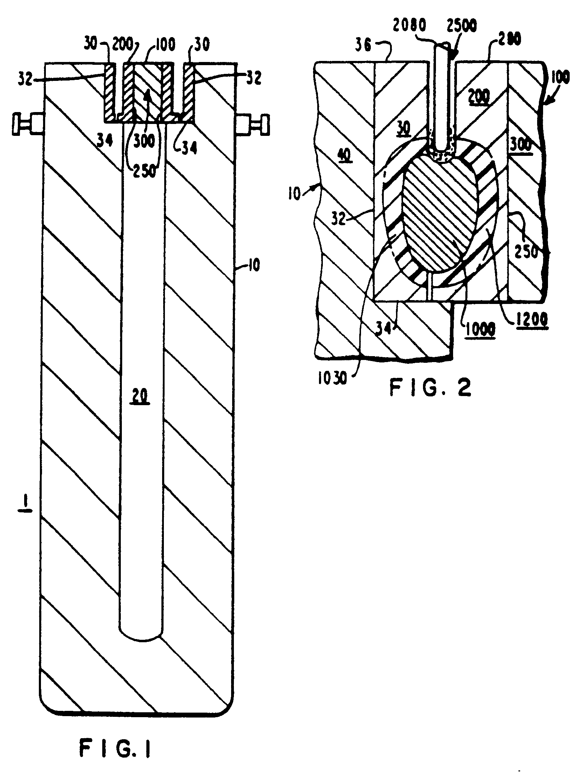

Referring to Fig. 1, a cylindrical heavy-wall nuc-

lear waste container 1 is composed of two unassembled components, namely a main body component 10 and a plug component 100. Both components are mainly composed of cast iron, preferably grey or ductile cast iron, with sufficient wall thickness to provide the containment function with respect to any radioactive material to be held in cavity 20 of the main body component 10. At the opening to the cavity 20 a nickel carbon alloy insert or component 30 has been metallurgically bonded to the cast iron main body component 10. The bond interface is schematically shown at 32 and 34.

Similarly, a nickel-carbon alloy insert or component 200 has been metallurgically bonded to the circumferential periphery of the cast iron portion 300 of plug 100 forming a bond line interface 250.

An insert-to-iron bonding method resulting in some fusion of the materials at their interfaces 32. 34 and 250, is selected to assure that all mechanical interfaces are hermetically sealed by metallurgical bonds. For example, the nickel-carbon inserts 30 and 200 may be bonded to their respective components during the casting of the component by having the inserts preplaced in the casting mold. Alternatively, for example, the inserts could be applied to the components as a thick weld overlay In any case, any adverse microstructural or stress conditions produced in the insert-to-cast iron bond region can be modified by controlling thermal conditions during the bonding operation or by subsequent heat treatment, prior to loading the main body component with nuclear waste material.

Once the radioactive materials have been placed in cavity 20, the plug 100 is placed in the opening to the cavity as shown in Figure 1 Now referring to Figure 2, it will be noted that closure of the assembled components involves joining the plug 100 and main body components 10 by welding the nickel carbon inserts 200 and 30 together using a suitable autogenous or filler metal welding process. A narrow groove, arc. filler metal welding process is illustrated in Fig. 2. By using a sufficient amount of insert material and controlling the welding process, the cast iron can be prevented from melting or reaching temperatures where austenite is formed (T < T eutectoid). This prevents the high stress producing solidification or martensite phase changes from occurring. Furthermore, the cast iron remains a stronger material since it is not subjected to severe elevated temperatures and, thus, is better able to react to those thermal and solidification strains transmitted from the insert welding operation without fracturing. These conditions are illustrated in Fig. 2. It can be seen that the nickel-carbon inserts 30 and 200 have sufficient thickness to fully contain, not only the fusion zone 1000 of the weld, but also the heat affected zones I030 and 1200. It can thus be seen that the cast iron 40 and 300 adjacent to the nickel-carbon alloy inserts 30 and 200, respectively, is thus kept below its austenizing temperature during welding.

Fig. 2 shows the in-progress forming of the closure weld using a consumable welding electrode or filler wire 2080 to fill the narrow tubular groove 2500 formed between inserts 30 and 200. At the completion of closure welding, groove 2500 will be completely filled with weld metal and fusion zone 1000 and heat affected zones I030 and 1200 will extend to the top surfaces 36 and 280 of nickel carbon inserts 30 and 200, respectively.

The weld rod 2080 may be selected from commercially available nickel-carbon, and nickel-carbon-iron alloy metal arc welding rods, and flux core wire. For example, NI-ROD, NI-ROD 55, NI-ROD FC55 (all manufactured and marketed by Huntington Alloys of Huntington, West Virginia) are suitable for use in the present invention. NI-ROD, a nickel-carbon welding electrode, has a nominal composition of (wt.%): 95 Ni, I.0 C, 0.2 Mn, 3.0 Fe, .005 S, 0.7 Si, and 0.I Cu. NI-ROD is a preferred welding rod for use herein.

While other welding processes are contemplated, the joint design shown in the figures may require modification, since the closure welding process, joint design, and insert material thickness have to be developed together to insure that temperature and stress conditions produced in the surrounding cast iron fall below critical levels which can cause structural damage.

The nickel-carbon inserts have a composition of from 2 to 5 weight percent carbon with the remainder of the alloy being nickel except for minor amounts of incidental impurities normally observed in commercially pure nickel (i.e. Nickel 200). In this composition range the inserts, which may be produced by casting, have a microstructure which is characterized by 8-20 volume percent of graphite, the actual volume percentage observed depends upon the carbon content of the alloy selected. The graphite is distributed in substantially isolated, or discontinuous, islands in a matrix structure which is essentially nickel containing small amounts of carbon in solution, in addition to any incidental impurities.

While not wishing to be bound by theory, the applicants believe that the understanding of, use of, and the advantageous results obtained from, the present invention can be furthered by the following theories upon which they have based the present invention.

The nickel-carbon binary, equilibrium phase diagram is eutectic in nature. Nickel does not undergo any solid state phase transformations. There are no stable nickel carbides. The two by the overall structure. This should eliminate any need for pre-weld or post-weld heat treatment.

3. The external surface area ratio of welding insert material to cast iron, and the electrochemical relationship between nickel, iron and graphite will combine to nullify any potential for galvanic corrosion.

## Claims

1. A container for nuclear waste which comprises a main body of cast iron with an opening at one end communicating with a cavity and a plug for locating in said opening, characterized in that a first nickel-carbon alloy insert (30) surrounds said opening and is metallurgically bonded to said one end of said main body (10), and said plug (100) has a cast iron core (300), there being a second nickel-carbon alloy insert (200) which is metallurgically bonded to the cast iron core (300) the said inserts being fusion weldable together to hermetically seal said cavity without heating the cast iron container to an austenite formation temperature.

2. A container according to claim 1, characterized in that the nickel-carbon alloy insert (30) and the cast iron of the main body (10) of the container and the nickel-carbon alloy insert (200) all have a microstructure containing a graphite phase.

3. A container according to claim 2, characterized in that the graphite phase is also found in the microstructure of the cast iron core (300) of the plug (100) as well as in the weld formed on hermetically sealing the cavity (20).

4. A container according to claim 3, characterized in that the two inserts (30,200) are comprised of alloys containing 2 to 5 weight percent carbon with the balance nickel except for incidental impurities.

## Patentansprüche

1. Ein Behälter für den nuklearen Abfall, der einen Hauptkörper aus Gußeisen mit einer Öffnung an einem Ende, die mit einer Höhlung in Verbindung steht, und einen Stopfen zur Anordnung in der Öffnung aufweist, dadurch gekennzeichnet, daß ein erster Nickelkohlen- stofflegierungseinsatz (30) die Öffnung umgibt und an das genannte eine Ende des Hauptkörpers (10) metallurgisch gebunden ist, und daß der Stopfen (100) einen Gußeisenkern 300 aufweist, wobei dort ein zweiter Nickelkohlenstofflegierungseinsatz (200) vorhanden ist, der an dem Gußeisenkern (300) metallurgisch gebunden ist, wobei die Einsätze mit- einander schmelzverschweißbar sind, um die Höhlung hermetisch abzudichten, ohne daß der Gußeisenbehälter auf eine Austenit bildende Temperatur erhitzt wird.

2. Ein Behälter nach Anspruch 1, dadurch gekennzeichnet, daß der Nickelkohlenstofflegierungseinsatz (30) und das Gußeisen des Hauptkörpers (10) des Behälter und der Nickelkohlenstofflegierungseinsatz (200) alle eine Mikrostruktur besitzen, die eine Graphitphase enthält.

3. Ein Behälter nach Anspruch 2, dadurch gekennzeichnet, daß die Graphitphase sich auch in der Mikrostruktur des Gußeisenkerns (300) des Stopfens (100) wie auch in der Schweißung findet, gebildet beim hermetischen Abdichten der Höhlung (20).

4. Ein Behälter nach Anspruch 3, dadurch gekennzeichnet, daß die zwei Einsätze (30, 200) aus Legierungen bestehen, die 2 bis 5 Gew% kohlenstoff enthalten, mit dem Rest aus Nickel, abgesehen,von zufälligen Unreinheiten.

## Revendications

1. Conteneur de déchets radioactifs comprenant un corps principal en fonte, muni à l'une de ses extrémités d'une ouverture communiquant avec une cavité et un bouchon destiné à être placé dans cette ouverture, conteneur caractérisé en ce qu'un premier élément d'insertion en alliage de nickel-carbone (30) entoure l'ouverture et se trouve métallurgiquement scellé à cette extrémité du corps principal (10), le bouchon (100) étant constitué d'un noyau en fonte (300) entouré d'un second élément d'insertion (200) en alliage nickel-carbone fixé métallurgiquement au noyau en fonte (300), ces éléments d'insertion étant soudés par fusion pour sceller hermétiquement la cavité sans qu'il soit nécessaire de chauffer la fonte à une température de formation d'austénite.

2. Conteneur selon la revendication 1, caractérisé en ce que l'insert en alliage nickel-carbone (30) et la fonte du corps principal (10) du conteneur et l'élément d'insertion (200) en alliage nickel-carbone ont tous une microstructure contenant une phase de graphite.

3. Conteneur selon la revendication 2, caractérisé en ce que la phase en graphite existe également dans la microstructure du noyau en fonte (300) du bouchon (100) ainsi que dans la soudure formée sur le scellement hermétique de la cavité (20).

4. Conteneur selon la revendication 3, caractérisé en ce que les deux éléments d'insertion (30, 200) sont réalisés en des alliages contenant entre 2 et 5 % de carbone avec un complément de nickel à l'exception près d'impuretés éventuelles.

FIG. I

FIG. 2